# EUROPÄISCHE PATENTSCHRIFT

(11) **EP 1 972 905 B1**
(45) Veröffentlichungstag und Bekanntmachung des Hinweises auf die Patenterteilung: **23.01.2013**
(21) Anmeldenummer: 07023633.6
(22) Anmeldetag: 06.12.2007
(51) Int. Cl.: G01F 23/284, G01S 13/46, G01F 23/68

(54) **Füllstandsmessvorrichtung**
Fluid level measuring device
Dispositif de mesure du niveau de remplissage

(30) Priorität: 31.01.2007 DE 102007005619
(43) Veröffentlichungstag der Anmeldung: 24.09.2008
(73) Patentinhaber: Krohne S.A., 26103 Romans - Cedex (FR)
(72) Erfinder: Dirk, Schulz, 47809 Krefeld (DE)
(74) Vertreter: Gesthuysen, von Rohr & Eggert

(56) Entgegenhaltungen:
- EP-A1- 1 128 169
- EP-A2- 1 126 251
- DE-A1- 4 241 910
- DE-A1- 10 028 807
- DE-A1- 19 532 646

## Beschreibung

Die Erfindung betrifft eine Füllstandsmeßvorrichtung, zur Messung des Füllstands eines in einem Behälter befindlichen Mediums, mit einem Referenzbehälter, der derart mit dem Behälter verbindbar ist, daß der Füllstand in dem Referenzbehälter dem Füllstand in dem Behälter entspricht, wobei der Referenzbehälter eine Anschlußvorrichtung für ein nach dem Radar-Prinzip arbeitendes Mikrowellen-Füllstandsmeßgerät aufweist, wobei die Anschlußvorrichtung eine Einkoppeleinrichtung für ein Mikrowellensignal aufweist. Eine derartige Füllstandsmeßvorrichtung ist z. B. aus der EP 1 126 251 A2 bekannt.

Bei industriellen Anwendungen besteht häufig die Aufgabe, den Füllstand eines Mediums, häufig einer Flüssigkeit, zu bestimmen, das sich in einem Behälter, wie einem Tank, befindet. Dazu sind unterschiedliche Techniken bekannt, wobei man zwischen berührenden Füllstandsmeßverfahren und nichtberührenden Füllstandsmeßverfahren unterscheidet.

Zu den berührenden Füllstandsmeßverfahren, bei denen ein Bestandteil der Meßeinrichtung mit dem Medium, dessen Füllstand zu messen ist, in Berührung kommt, gehören z. B. die Füllstandsmessung mittels eines Schwimmers, eines Auftriebskörpers oder einer Tastplatte. Ferner gehören zu den berührenden Füllstandsmeßverfahren kapazitive Messungen, bei denen die füllhöhenbedingte Kapazität zwischen einer in das Medium eintauchenden Elektrode und der Wand des Behälters erfaßt wird, sowie eine thermische Messung, bei der die erhöhte Wärmeabfuhr beim Eintauchen eines stromdurchflossenen, temperaturabhängigen Widerstands in das Medium dadurch ausgenutzt wird, daß sich der elektrische Widerstand mit der Eintauchtiefe verändert.

Zu den nichtberührenden Füllstandsmeßverfahren gehören z. B. die Messung mittels Laser oder Ultraschall. Dabei wird ein Laser- bzw. Ultraschallsignal ausgesandt, an der Oberfläche des Mediums reflektiert, und das reflektierte Signal wird wieder erfaßt, wobei auf die Füllhöhe des Mediums über die Laufzeit des Signals geschlossen wird. Auf demselben Prinzip basiert das Radar-Füllstandsmeßverfahren, bei dem ein Mikrowellensignal erzeugt und in Richtung auf das Medium, dessen Füllstandshöhe zu messen ist, ausgesandt wird, an der Oberfläche des Mediums reflektiert wird und dann wieder erfaßt wird.

Dabei existieren unterschiedliche Radar-Füllstandsmeßverfahren:

Beim Puls-Radar-Füllstandsmeßverfahren wird ein Mikrowellensignal in kurzen Impulsen ausgesandt, und zwar unmoduliert oder trägerfrequenzmoduliert. Aus der Laufzeit der Mikrowellenimpulse vom Sender zur Oberfläche des Mediums und zurück zum Empfänger wird der Abstand zwischen dem Sender bzw. Empfänger und dem Medium ermittelt.

Beim FMCW-Radar-Füllstandsmeßverfahren (FMCW = Frequency Modulated Continuous Wave) liegt das Mikrowellensignal kontinuierlich an, wobei jedoch die Frequenz moduliert wird, und zwar typischerweise in aufeinandexfolgenden Rampen. Durch die Verzögerungszeit während der Signalausbreitung hat sich die Sendefrequenz beim Empfang des reflektierten Signals geändert, so daß man aus der Differenzfrequenz auf den Abstand der reflektierenden Oberfläche und damit auf den Füllstand schließen kann.

Schließlich ist noch das TDR-Radar-Füllstandsmeßverfahren (TDR = Time Domain Reflectometry) bekannt, das Ähnlichkeit mit dem Puls-Radar-Füllstandsmeßverfahren aufweist, im allgemeinen jedoch leitungsungebunden arbeitet und elektrische Impulse ohne Trägerfrequenz verwendet.

Bei großen Behältern und insbesondere wenn diese Behälter befüllt werden oder Flüssigkeit aus ihnen abgelassen wird, ist die Oberfläche des Mediums häufig unruhig, d. h. uneben. Aus diesem Grund, aber auch wegen möglicher Einbauten in dem Behälter, sind Füllstandsmeßvorrichtungen bekannt, bei denen ein Referenzbehälter verwendet wird. Dieser Referenzbehälter ist derart mit dem Behälter verbunden, daß der Füllstand im Referenzbehälter dem Füllstand in dem eigentlichen, als Tank dienenden Behälter entspricht. Dazu sind derartige Referenzbehälter, die häufig auch als Bypass bezeichnet werden, im allgemeinen in ihrem oberen und in ihrem unteren Bereich mittels eines jeweiligen Rohranschlusses mit dem Behälter verbunden, so daß das Medium auch in den Referenzbehälter gelangen kann. Als Referenzbehälter werden im allgemeinen Rohre mit deutlich geringeren Durchmessern als der Durchmesser des eigentlichen als Tank verwendeten Behälters verwendet. Auf diese Weise wird eine deutlich ruhigere Oberfläche des Mediums erzielt, was eine stabile und genauere Füllstandsbestimmung ermöglicht.

Wird nun für die Füllstandsmessung in einem derartigen Referenzbehälter ein Mikrowellen-Füllstandsmeßgerät verwendet, so muß das Mikrowellensignal in den Referenzbehälter eingekoppelt werden. Allgemein ist die Einkopplung eines von einer Mikrowellenquelle erzeugten Mikrowellensignals in einen Behälter z. B. in der DE 100 60 068 C1 beschrieben. Die Einkopplung für den konkreten Fall der Verwendung eines Referenzbehälters ist der eingangs schon erwähnten EP 1 126 251 A2 entnehmbar. Allen dort gezeigten Lösungen ist gemein, daß die Einkoppeleinrichtung für das Mikrowellensignal mit dem Referenzbehälter lösbar verbunden ist, im allgemeinen nämlich mittels einer Schraub- oder Flanschverbindung. Im allgemeinen führt dies jedoch zu mikrowellenmäßig nicht idealen Übergängen, und außerdem sind mit einer Schraub- oder Flanschverbindung zusätzliche Kosten verbunden.

Dementsprechend liegt der Erfindung die Aufgabe zugrunde, eine kostengünstige Lösung für den Anschluß eines Mikrowellen-Füllstandsmeßgeräts an einen Referenzbehälter anzugeben, mit der eine optimierte Signaleinkopplung gewährleistet wird.

Ausgehend von der eingangs beschriebenen Füllstandsmeßvorrichtung ist diese Aufgabe dadurch gelöst, daß die Einkoppeleinrichtung als Behälterabschluß des Referenzbehälters wirkt, daß die Einkoppeleinrichtung ein Mikrowellenfenster und eine Impedanzanpassungseinheit aufweist, und daß das Mikrowellenfenster in die Impedanzanpassungseinheit eingesetzt ist.

Erfindungsgemäß ist also vorgesehen, daß der Referenzbehälter, an den ein Mikrowellen-Füllstandsmeßgerät angeschlossen werden soll, seine eigene Einkoppeleinrichtung für das Mikrowellensignal bereits "mitbringt". Auf diese Weise kann eine optimale mikrowellenmäßige Anpassung an die Geometrie des Referenzbehälters erfolgen. Darüber hinaus ist diese Lösung kostengünstig, da keine zusätzlichen aufwendigen Anschlußmöglichkeiten für das Mikrowellen-Füllstandsmeßgerät vorgesehen werden müssen. Vielmehr kann das Mikrowellen-Füllstandsmeßgerät auf einfache Weise auf die Anschlußvorrichtung aufgesetzt werden, wo es zu seiner Halterung mit einfachen Mitteln befestigt werden kann.

Gemäß der Erfindung ist vorgesehen, daß die Einkoppeleinrichtung bereits als Behälterabschluß des Referenzbehälters wirkt. Mit anderen Worten heißt das, daß der Referenzbehälter nicht mehr zusätzlich verschlossen werden muß. Vielmehr ist gemäß dieser bevorzugten Weiterbildung der Erfindung vorgesehen, daß die an dem Referenzbehälter vorgesehene Einkoppeleinrichtung diesen bereits selbst abschießt.

Gemäß einer bevorzugten Weiterbildung der Erfindung ist in diesem Zusammenhang auch vorgesehen, daß der Referenzbehälter mittels der Einkoppeleinrichtung druckdicht verschlossen ist. Auf diese Weise werden Bedingungen erzielt, wie sie ansonsten praktisch nur mit druckdichten Flanschverbindungen erzielt werden konnten, wobei der mechanische Aufwand wesentlich geringer ist, was zu nicht unerheblichen Kosteneinsparungen führt.

Dabei ist es gemäß einer bevorzugten Weiterbildung der Erfindung insbesondere vorgesehen, daß die Einkoppeleinrichtung mit dem Referenzbehälter fest verbunden ist. Insbesondere ist gemäß einer bevorzugten Weiterbildung der Erfindung vorgesehen, daß die Einkoppeleinrichtung mit dem Referenzbehälter verschweißt ist. Vorzugsweise ist also vorgesehen, daß die Einkoppeleinrichtung mit dem Referenzbehälter einstückig ausgebildet ist.

Grundsätzlich sind unterschiedliche Lösungen zur Verbindung des Referenzbehälters mit der Einkoppeleinrichtung möglich. Gemäß einer bevorzugten Weiterbildung der Erfindung ist jedoch vorgesehen, daß der Referenzbehälter zur Verbindung mit der Einkoppeleinrichtung ein Rohrstück aufweist und die Impedanzanpassungseinheit einen kontinuierlichen Übergang von dem Durchmesser des Mikrowellenfensters auf den Durchmesser des Rohrstücks gewährleistet. Zur Impedanzanpassung kann ferner eine entsprechende Form des Mikrowellenfensters selbst oder eines daran angesetzten Anpassungskörpers vorgesehen sein, wie allgemein schon aus dem Stand der Technik bekannt.

Grundsätzlich kann der Referenzbehälter lediglich mit dem Mikrowellen-Füllstandsmeßgerät zur Füllstandsmessung versehen sein. Gemäß einer bevorzugten Weiterbildung der Erfindung ist jedoch vorgesehen, daß in dem Referenzbehälter eine zusätzliche Füllstandsmeßeinrichtung vorgesehen ist. Dabei ist es ganz besonders bevorzugt, daß als zusätzliche Füllstandsmeßeinrichtung ein magnetischer Füllstandsanzeiger mit einem Schwimmer vorgesehen ist. Die Funktion einer derartigen Füllstandsmeßeinrichtung beruht darauf, daß die Höhe des Schwimmers naturgemäß die Füllstandshöhe im Referenzbehälter angibt und mittels einer an dem Schwimmer vorgesehenen Magneteinrichtung diese in einen Bereich außerhalb des Referenzbehälters überträgt, wo ein ebenfalls mit einer Magneteinrichtung versehenes Anzeigeelement vorgesehen ist. Dies ermöglicht es einem Verwender der Füllstandsmeßvorrichtung, mittels eines kurzen Blicks auf den Referenzbehälters schnell festzustellen, in welchem Füllzustand sich der Behälter befindet.

Im folgenden wird die Erfindung unter Bezugnahme auf die Zeichnung anhand bevorzugter Ausführungsbeispiele im Detail erläutert. In der Zeichnung zeigt
- Fig. 1: schematisch eine Füllstandsmeßvorrichtung gemäß einem ersten bevorzugten Ausführungsbeispiel der Erfindung,
- Fig. 2: die Füllstandsmeßeinrichtung gemäß dem ersten bevorzugten Ausführungsbeispiel der Erfindung im Detail, teilweise im Schnitt, und
- Fig. 3: eine Füllstandsmeßvorrichtung gemäß einem zweiten bevorzugten Ausführungsbeispiel der Erfindung, teilweise im Schnitt.

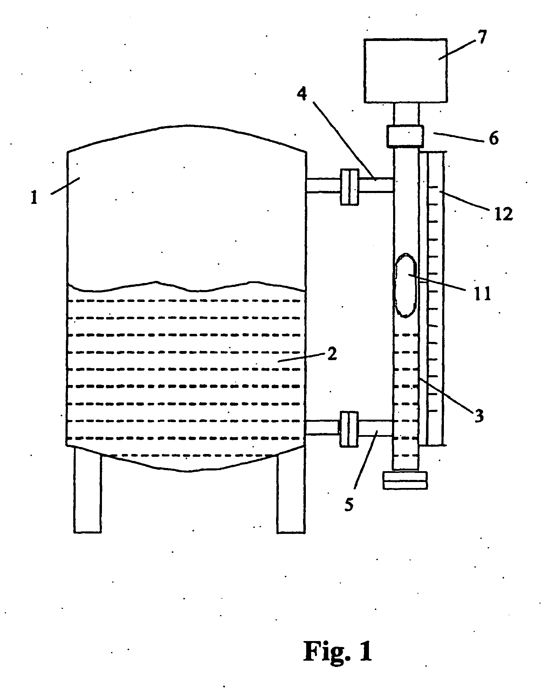

Aus Fig. 1 ist schematisch eine Füllstandsmeßvorrichtung gemäß einem ersten bevorzugten Ausführungsbeispiel der Erfindung ersichtlich, mit der der Füllstand eines in einem Behälter 1 befindlichen Mediums 2 erfaßt werden soll. Dazu ist ein Referenzbehälter 3 vorgesehen, der mittels Rohranschlüssen 4 bzw. 5 mit dem Behälter 1 verbindbar ist. Auf diese Weise wird in dem Referenzbehälter 3 der gleiche Füllstand des Mediums 2 wie im Behälter 1 erzielt. Jedoch weist der Referenzbehälter 3 einen wesentlich geringeren Durchmesser als der Behälter 1 auf, so daß in dem Referenzbehälter 3 eine ruhigere Oberfläche des Mediums 2 erzielt wird, was die Meßgenauigkeit einer Mikrowellen-Füllstandsmessung verbessert.

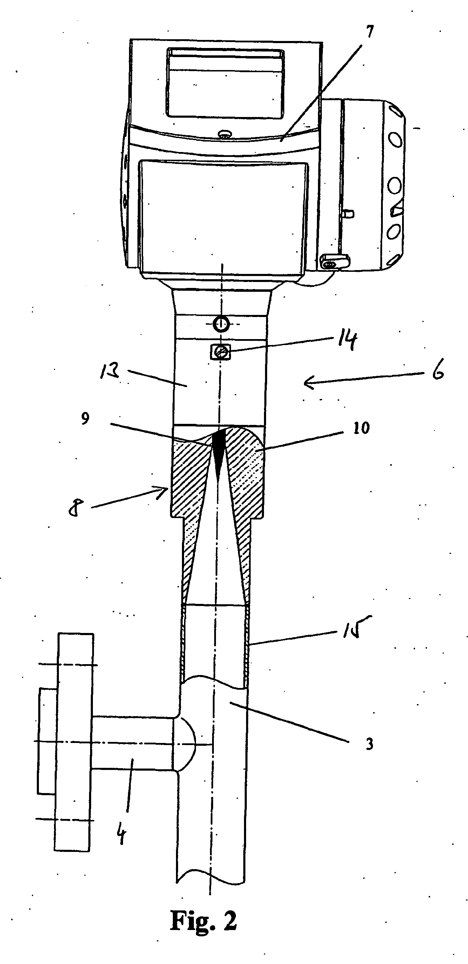

Zur Durchführung einer derartigen Mikrowellen-Füllstandsmessung ist nun ein mittels einer Anschlußvorrichtung 6 mit dem Behälter 1 verbundenes Mikrowellen-Füllstandsmeßgerät 7 vorgesehen, das nach dem Radar-Prinzip arbeitet. Wesentlich ist dabei, daß die Anschlußvorrichtung 6 eine aus Fig. 2 ersichtliche Einkoppeleinrichtung 8 für ein Mikrowellensignal aufweist. Diese Einkoppeleinrichtung 8 umfaßt ein Mikrowellenfenster 9 und eine Impedanzanpassungseinheit 10. Das Mikrowellenfenster 9 weist zur Impedanzanpassung die aus Fig. 2 ersichtliche Form auf und ist in die Impedanzanpassungseinheit 10 eingesetzt. Was Form, Material und Installation des Mikrowellenfensters 9 in der Impedanzanpassungseinheit 10 angeht, sind grundsätzlich alle aus dem Stand der Technik bekannten Lösungen möglich.

Außer der Mikrowellen-Füllstandsmessung ist in dem Referenzbehälter 3 nun noch eine zusätzliche Füllstandsmessung vorgesehen, und zwar mittels eines Schwimmers 11. Dieser weist nicht weiter dargestellte Magneteinrichtungen auf, mittels derer die Füllstandshöhe des Mediums 2 in dem Referenzbehälter 3 nach außen auf eine Skala 12 übertragbar ist und an dieser abgelesen werden kann. Auf diese Weise wird es einem Verwender der Füllstandsmeßvorrichtung gemäß dem vorliegend beschriebenen ersten bevorzugten Ausführungsbeispiel der Erfindung auf einfache Weise ermöglicht, mittels eines kurzen Blicks auf die Skala 12 eine erste grundsätzliche Information über den Füllzustand des Referenzbehälters 3 und damit des Behälters 1 zu erhalten. Interessiert der genaue Füllstand des Mediums 2, kann der mittels der Mikrowellen-Füllstandsmessung ermittelte Füllstandswert z. B. digital von einer nicht weiter dargestellten Anzeige abgelesen werden. Im übrigen kann der mittels der Mikrowellen-Füllstandsmessung ermittelte Füllstandswert auch elektronisch weitergegeben und weiterverarbeitet werden.

Wie nun wieder aus Fig. 2 ersichtlich, wirkt die Einkoppeleinrichtung 8 der Anschlußvorrichtung 6 als Behälterabschluß des Referenzbehälters 3. Damit ist der Referenzbehälter 3 mittels der Ankoppeleinrichtung 8 auch druckdicht verschlossen. Erreicht wird dies vorliegend, indem die Einkoppeleinrichtung 8 mit dem Referenzbehälter 3 fest verbunden, nämlich mit diesem verschweißt ist. Auf diese Weise kann das Mikrowellen-Füllstandsmeßgerät 9 auf ganz einfache Weise auf den Referenzbehälter 3 aufgesetzt und mit diesem mit einer einfachen Befestigungseinrichtung 13, die lediglich eine kleine Schraube 14 aufweist, befestigt werden. Schließlich müssen damit keinerlei Abdichtungen mehr erzielt werden.

Darüber hinaus gewährleistet die Konstruktion der Füllstandsmeßvorrichtung gemäß dem vorliegend beschriebenen ersten bevorzugten Ausführungsbeispiel der Erfindung, eine mikrowellenmäßig praktisch ideale Anpassung der Übertragung des in dem Mikrowellen-Füllstandsmeßgerät 7 erzeugten Mikrowellensignals in den Referenzbehälter 3. Eine Fehlanpassung durch unbekannte bzw. sich ändernde Geometrien des jeweils verwendeten Referenzbehälters 3 sind damit ausgeschlossen.

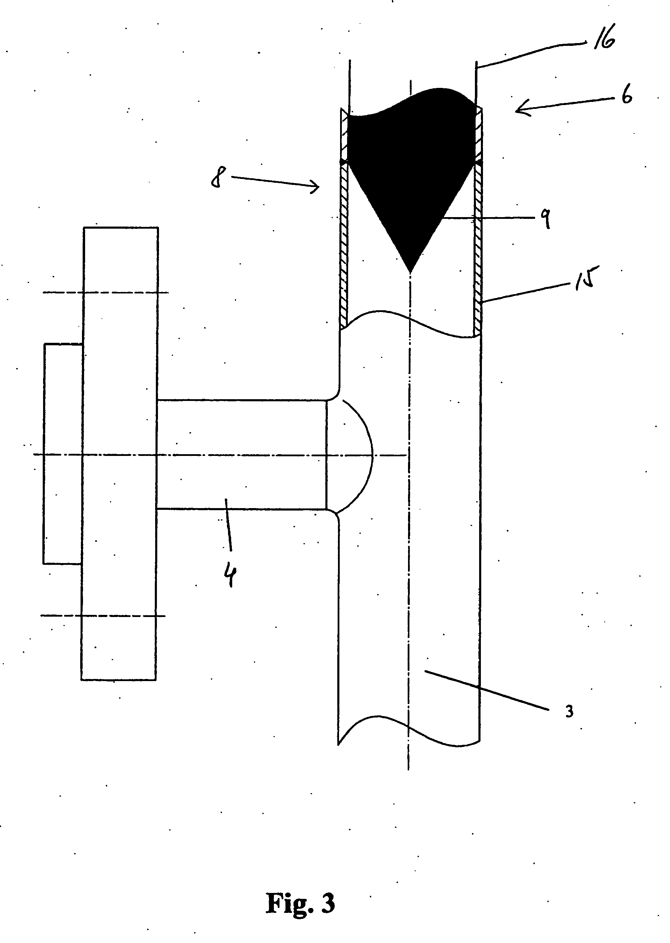

Während bei dem aus Fig. 1 und 2 ersichtlichen ersten bevorzugten Ausführungsbeispiel der Erfindung ein kontinuierlicher Übergang von dem Durchmesser des Mikrowellenfensters 9 auf den Durchmesser des zur Verbindung mit der Einkoppeleinrichtung 8 verwendeten Rohrstücks 15 des Referenzbehälters 3 vorgesehen ist, ist nun aus Fig. 3 eine derartige Konstruktion ersichtlich, bei der der Durchmesser des Hohlleiters 16, der das Mikrowellensignal von dem Mikrowellenfüllstandsmeßgerät 7 zum Referenzbehälter 3 führt, bereits dem Durchmesser des Referenzbehälters 3 entspricht. Eine antennenähnliche Aufweitung ist damit nicht notwendig, da das Mikrowellensignal ideal geführt wird. Wie auch bei dem ersten bevorzugten Ausführungsbeispiel der Erfindung stellt das Mikrowellenfenster 9 hier den hermetischen Abschluß des Referenzbehälters 3 dar, was, wie weiter oben schon ausgeführt, eine besonders kostengünstige Lösung im Vergleich mit den bekannten Schraub- und Flanschverbindungen darstellt, die ansonsten selbst die Abdichtung gewährleisten müssen.

## Patentansprüche

1. Füllstandsmeßvorrichtung, zur Messung des Füllstands eines in einem Behälter (1) befindlichen Mediums (2), mit einem Referenzbehälter (3), der derart mit dem Behälter (1) verbindbar ist, daß der Füllstand in dem Referenzbehälter (3) dem Füllstand in dem Behälter (1) entspricht, wobei der Referenzbehälter (3) eine Anschlußvorrichtung (6) für ein nach dem Radar-Prinzip arbeitendes Mikrowellenfüllstandsmeßgerät (7) aufweist, wobei die Anschlußvorrichtung (6) eine Einkoppeleinrichtung (8) für ein Mikrowellensignal aufweist,
**dadurch gekennzeichnet,**
**daß** die Einkoppeleinrichtung (8) als Behälterabschluß des Referenzbehälters (3) wirkt,
**daß** die Einkoppeleinrichtung (8) ein Mikrowellenfenster (9) und eine Impedanzanpassungseinheit (10) aufweist,
und
**daß** das Mikrowellenfenster (9) in die Impedanzanpassungseinheit (10) eingesetzt ist.

2. Füllstandsmeßvorrichtung nach Anspruch 1, **dadurch gekennzeichnet, daß** der Referenzbehälter (3) mittels der Einkoppeleinrichtung (8) druckdicht verschlossen ist.

3. Füllstandsmeßvorrichtung nach Anspruch 1 oder 2, **dadurch gekennzeichnet, daß** die Einkoppeleinrichtung (8) mit dem Referenzbehälter (3) fest verbunden ist.

4. Füllstandsmeßvorrichtung nach Anspruch 3, **dadurch gekennzeichnet, daß** die Einkoppeleinrichtung (8) mit dem Referenzbehälter (3) einstückig ausgebildet ist.

5. Füllstandsmeßvorrichtung nach einem der Ansprüche 1 bis 4, **dadurch gekennzeichnet, daß** der Referenzbehälter (3) zur Verbindung mit der Einkoppeleinrichtung (8) ein Rohrstück (15) aufweist und die Impedanzanpassungseinheit (10) einen kontinuierlichen Übergang von dem Durchmesser des Mikrowellenfensters (9) auf den Durchmesser des Rohrstücks (15) gewährleistet.

6. Füllstandsmeßvorrichtung nach einem der Ansprüche 1 bis 5, **dadurch gekennzeichnet, daß** in dem Referenzbehälter (3) eine zusätzliche Füllstandsmeßeinrichtung vorgesehen ist.

7. Füllstandsmeßvorrichtung nach Anspruch 6, **dadurch gekennzeichnet, daß** als zusätzliche Füllstandsmeßeinrichtung ein magnetischer Füllstandsanzeiger mit einem Schwimmer (11) vorgesehen ist.

## Claims

1. Fill level measuring device, for measuring the fill level of a medium (2) located in a container (I), having a reference container (3), which is connectable to the container (1) in such a manner, that the fill level in the reference container (3) corresponds to the fill level in the container (1), wherein the reference container (3) has a connecting device (6) for a microwave fill level measuring device (7) operating according to the radar principle, wherein the connecting device (6) has a coupling device (8) for a microwave signal,
**characterized in**
**that** the coupling device (8) acts as a container closure for the reference container (3),
**that** the coupling device (8) has a microwave window (9) and an impedance matching unit (10),
and
**that** the microwave window (9) is used in the impedance matching unit (10).

2. Fill level measuring device according to claim 1, **characterized in that** the reference container (3) is closed in a pressure-proof manner by means of the coupling device (8).

3. Fill level measuring device according to claim I or 2, **characterized in that** the coupling unit (8) is firmly connected to the reference container (3).

4. Fill level measuring device according to claim 3, **characterized in that** the coupling unit (8) is formed integrally with the reference container (3).

5. Fill level measuring device according to any one of claims 1 to 4, **characterized in that** the reference container (3) has a tubular piece (15) for connection to the input device (8) and the impedance matching unit (10) guarantees a continuous transition from the diameter of the microwave window (9) to the diameter of the tubular piece (15).

6. Fill level measuring device according to any one of claims 1 to 5, **characterized in that** an additional fill level measuring device is provided in the reference container (3).

7. Fill level measuring device according to claim 6, **characterized in that** a magnetic fill level indicator with a float (11) is provided as an additional fill level measuring device.

## Revendications

1. Dispositif de mesure du niveau de remplissage, pour mesurer le niveau de remplissage d'un fluide (2) se trouvant dans un récipient (1), comprenant un récipient de référence (3) qui peut être connecté au récipient (1) de telle sorte que le niveau de remplissage dans le récipient de référence (3) corresponde au niveau de remplissage dans le récipient (1), le récipient de référence (3) présentant un dispositif de raccord (6) pour un appareil de mesure de niveau de remplissage à micro-ondes (7) fonctionnant selon le principe radar, le dispositif de raccord (6) présentant un dispositif de couplage (8) pour un signal micro-ondes,
**caractérisé en ce que**
le dispositif de couplage (8) agit en tant que terminaison de récipient du récipient de référence (3),
**en ce que** le dispositif de couplage (8) présente une fenêtre à micro-ondes (9) et une unité d'adaptation d'impédance (10), et
**en ce que** la fenêtre à micro-ondes (9) est insérée dans l'unité d'adaptation d'impédance (10).

2. Dispositif de mesure du niveau de remplissage selon la revendication 1, **caractérisé en ce que** le récipient de référence (3) est fermé de manière étanche à la pression au moyen du dispositif de couplage (8).

3. Dispositif de mesure du niveau de remplissage selon la revendication 1 ou 2, **caractérisé en ce que** le dispositif de couplage (8) est connecté fermement au récipient de référence (3).

4. Dispositif de mesure du niveau de remplissage selon la revendication 3, **caractérisé en ce que** le dispositif de couplage (8) est réalisé d'une seule pièce avec le récipient de référence (3).

5. Dispositif de mesure du niveau de remplissage selon l'une quelconque des revendications 1 à 4, **caractérisé en ce que** le récipient de référence (3) présente, pour la connexion au dispositif de couplage (8), une pièce tubulaire (15) et l'unité d'adaptation d'impédance (10) garantit un transfert continu du diamètre de la fenêtre à micro-ondes (9) au diamètre de la pièce tubulaire (15).

6. Dispositif de mesure du niveau de remplissage selon l'une quelconque des revendications 1 à 5, **caractérisé en ce qu'**un dispositif de mesure du niveau de remplissage supplémentaire est prévu dans le récipient de référence (3).

7. Dispositif de mesure du niveau de remplissage selon la revendication 6, **caractérisé en ce que** l'on prévoit en tant que dispositif de mesure du niveau de remplissage supplémentaire un indicateur de niveau de remplissage magnétique avec un flotteur (11).
